# EUROPEAN PATENT APPLICATION

(11) **EP 3 672 207 A1**
(43) Date of publication of application: **24.06.2020**
(21) Application number: 19214754.4
(22) Date of filing: 10.12.2019
(51) Int. Cl.: H04L 29/08, H04W 36/30, G05B 19/418, D01H 13/26, D01H 13/32, H04W 36/00, H04W 84/12

(54) **TEXTILE MACHINE OPERATION SUPPORT SYSTEM AND METHOD**

(30) Priority: 18.12.2018 JP 2018236081
(71) Applicant: Murata Machinery, Ltd., Kyoto-shi, Kyoto 601-8326 (JP)
(72) Inventor: Nakai, Masato, Kyoto, 612-8686 (JP); Kuwana, Tetsuya, Kyoto, 619-0237 (JP); Hosomi, Yuichi, Kyoto, 619-0237 (JP)
(74) Representative: Hoffmann Eitle

(57) **Abstract**

A radio communications system comprises a plurality of textile machines 11 and a management device for analyzing operation information regarding operation of the plurality of textile machines 11. A relay 12 of the radio communications system includes a communication unit, a detection unit and a change unit. The communication unit performs wireless relay connection to any one of access pointers 14, including a first access pointer API and a second access pointer AP2. The detection unit detects a communication status of the first access pointer API connected to the relay 12, and a communication status of the second access pointer AP2 unconnected to the relay 12. The change unit changes an access point from the first access pointer API to the second access pointer AP2 whose communication status is better than that of the first access pointer when the communication statuses detected by the detection unit are judged to meet a requirement for changing the access point.

## Description

### BACKGROUND OF THE INVENTION

### 1. Field of the Invention

The present invention mainly relates to a textile machine operation support system.

### 2. Description of the Related Art

Patent Document 1: JP 2015-88782 A discloses a radio communications system including radio base station apparatuses and a communication terminal. Each radio base station apparatus functions as an access point to be wirelessly connected and communicate to the communication terminal. When one radio base station apparatus detects that a received signal intensity of radio wave from the communication terminal connected thereto is less than a threshold, the radio base station apparatus transmits handover information to another radio base station apparatus so as to urge the communication terminal to be connected to the other radio base station apparatus.

Patent Document 2: JP 2015-97344 A discloses a radio communications system including a terminal device (STA device) and access points. The terminal device stores identification information regarding the access points and priorities of the respective access points. The terminal device is connected to a high-priority access point of its searchable access points. The terminal device is considered as a portable terminal because the terminal device is described in Patent Document 2 as being located at the same position with a user.

Patent Document 3: JP 2011-171821 A discloses a router for radio communication via a plurality of data communication cards. The router functions as an access point to create a wireless LAN with another terminal. The router selects a data communication card for radio communication with an external base station based on a certain communication condition.

### SUMMARY OF THE INVENTION

Each of Patent Documents 1 to 3 describes a configuration such that a device, e.g., an access point or a portable terminal, changes its access point. However, none of Patent Documents 1 to 3 describes that a relay for relaying communication between an access point and another device changes its access point.

Consideration of the above-mentioned situation results in the present invention. A main object of the present invention is to provide a textile machine operation support system and a method in which a radio communicator serving as a relay spontaneously changes its access point to an appropriate access pointer.

The foregoing description is a problem to be solved by the present invention. Means for solving the problem and effects of the means will now be described.

In a first aspect of the present invention, a textile machine operation support system is configured as follows: The textile machine operation support system comprises a plurality of textile machines and a management device for analyzing operation information regarding operation of the plurality of textile machines. The textile machine operation support system is configured to transmit the operation information from the textile machines to the management device. The textile machine operation support system comprises a plurality of first radio communicators and a plurality of second radio communicators. The plurality of first radio communicators are connected to the management device so as to serve as access pointers, and are immovably disposed at respective fixed positions. The plurality of second radio communicators are connected to the plurality of textile machines respectively so as to serve as relays each of which relays connection between the corresponding textile machine and the corresponding first radio communicator, and are immovably disposed at respective fixed positions. Each of the second radio communicators includes a communication unit, a detection unit and a change unit. The communication unit performs wireless relay connection to any one of the plurality of first radio communicators, including a first access pointer and a second access pointer. The detection unit detects a communication status of the first access pointer connected to the second radio communicators, and a communication status of the second access pointer unconnected to the second radio communicators. The change unit changes an access point from the first access pointer to the second access pointer whose communication status is better than that of the first access pointer when the communication statuses detected by the detection unit are judged to meet a requirement for changing the access point.

Therefore, each second radio communicator can spontaneously change its access point to the second access pointer having the appropriate communication status so that it does not have to wait for disconnection of the first access pointer therefrom. Especially, in a case where a radio communicator is immovably disposed at a fixed position, its communication status can hardly be changed so that if it is connected to an access pointer having an inappropriate communication status, the connection to an access pointer having the inappropriate communication status is liable to continue. However, the present processing as mentioned above can develop the communication status. Therefore, the communication status between the first radio communicator and each of the second radio communicators can be kept appropriate so that the appropriate communication status can be always made between the plurality of textile machines and the management device. The management device can promptly obtain and analyze a huge amount of operation information generated in the plurality of textile machines. As a result, operation of the textile machines can be optimized and the textile machines can be surely given of maintenance at problematic points. Due to the above-mentioned configuration, the textile machines can be improved in runnability.

Preferably, the textile machine operation support system is configured so that each of the communication statuses of the first access pointer and the second access pointer detected by the detection unit is a radio field intensity.

Therefore, the communication statuses can be judged exactly.

Preferably, the textile machine operation support system is configured so that the requirement includes a condition that the radio field intensity of the first access pointer is less than the threshold, and the radio field intensity of the second access pointer is the greatest of those of the plurality of first radio communicators.

Therefore, due to adoption of the radio field intensity for the judgement, the communication statuses can be easily and exactly measured in appropriateness thereof so that each second radio communicator can be surely connected to an appropriate access pointer.

Preferably, the textile machine operation support system is configured so that the requirement includes a condition that the radio field intensity of the first access pointer is less than the threshold repeatedly at predetermined numbered serial detection times or continuously for a predetermined detection period, and the radio field intensity of the second access pointer is the greatest of those of the plurality of first radio communicators.

Therefore, in a case where the radio filed intensity is temporarily lowered and is quickly recovered to an appropriate level, the first radio communicator serving as the access point can be kept from being changed, thereby inhibiting waste change of the access point.

Preferably, the textile machine operation support system is configured as follows: Each of the second radio communicators is wirelessly connected to another of the second radio communicators or a portable terminal. The communication unit relays connection between the other of the second radio communicators or the portable terminal and the first radio communicator.

Therefore, in addition to the corresponding second radio communicator, the portable terminal or the other relay connected to the corresponding second radio communicator can come to have an appropriate communication status.

Preferably, the textile machine operation support system is configured so that a result of analysis by the management device is transmitted to a/the portable terminal.

Therefore, based on the analysis result displayed on the portable terminal, an operator handling the portable terminal can optimize operation of the textile machines, perform maintenance for a problematic point in any textile machine, or so on.

In a second aspect of the present invention, a textile machine operation support method is as follows: The textile machine operation support method is performed for a configuration in which operation information regarding operation of a plurality of textile machines is transmitted from the textile machines to a management device and is analyzed by the management device, a plurality of first radio communicators are connected to the management device so as to serve as access pointers and are immovably disposed at respective fixed positions, and a plurality of second radio communicators are connected to the plurality of textile machines respectively so as to serve as relays each of which relays connection between the corresponding textile machine and the corresponding first radio communicator and are immovably disposed at respective fixed positions. The textile machine operation support method comprises a detection step and a change step. Each of the second radio communicators performs the detection step of detecting a communication status between the corresponding second radio communicator and a first access pointer connected to the corresponding second radio communicators and a communication status between the corresponding second radio communicator and a second access pointer unconnected to the corresponding second radio communicator. Each of the second radio communicators performs the change step of changing an access point for the corresponding second radio communicator from the first access pointer to the second access pointer whose communication status is better than that of the first access pointer when the communication statuses detected by performing the detection step come to meet a requirement for changing the access point.

Therefore, the communication status between the first radio communicator and each of the second radio communicators can be kept appropriate so that the appropriate communication statuses can be always realized between the plurality of textile machines and the management device. The management device can promptly obtain and analyze a huge amount of operation information generated in the plurality of textile machines. As a result, the operation of the textile machines can be optimized and problematic points can receive maintenance. Due to the above-mentioned method, the textile machines can be improved in runnability.

### BRIEF DESCRIPTION OF THE DRAWINGS

FIG. 1 is a conceptual diagram illustrating an overall configuration of a radio communications system according to a present embodiment;
FIG. 2 is a front view of an overall configuration of a spinning machine;
FIG. 3 is a front view of an overall configuration of an automatic winder;
FIG. 4 is a functional block diagram of a relay, an access pointer and a portable terminal;
FIG. 5 is a diagram of a conventional system illustrating a connection relation when an access pointer AP2 is temporarily powered off;
FIG. 6 is a flowchart for changing an access point from one access pointer to another access pointer;
FIG. 7 is a diagram of the present system illustrating a connection relation when the access pointer AP2 is temporarily powered off;
FIG. 8 is a diagram illustrating that an access pointer having the greatest radio field intensity is selected when there are a plurality of access pointers proposed to become a new access point;
FIG. 9 is an explanatory diagram of an alternative radio communications system;
FIG. 10 is a flowchart for selecting an access pointer as an actual access point from access pointers proposed to become the new access point;
FIG. 11 is an explanatory diagram illustrating a processing to select an access pointer based on a hopping number; and
FIG. 12 is an explanatory diagram illustrating a processing to select one access pointer from access pointers having the same hopping number that is not less than 2.

### DETAILED DESCRIPTION OF THE PREFERRED EMBODIMENTS

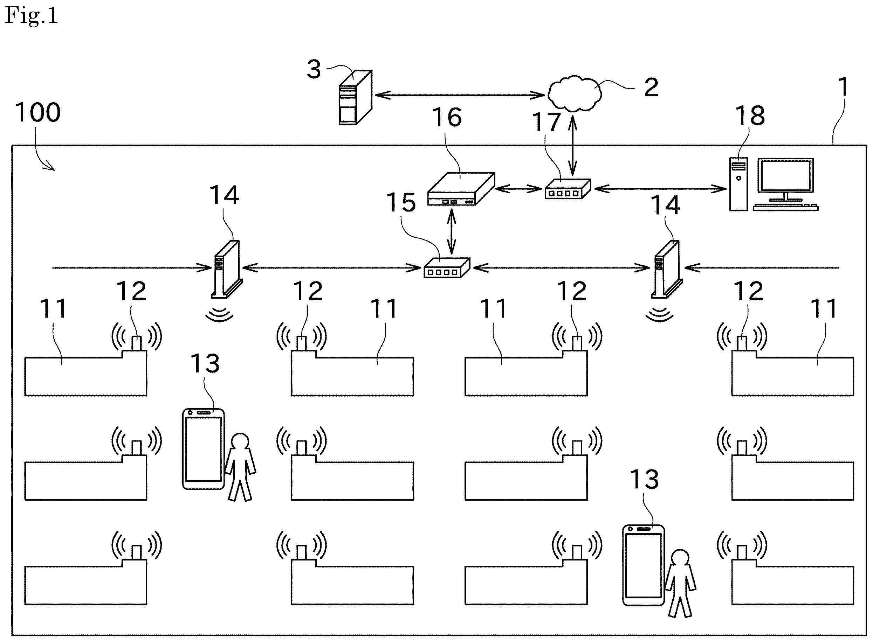

An embodiment of the present invention will be described with reference to the drawings. First, referring to FIG. 1, a radio communications system 100 according to the embodiment will be described. FIG. 1 is a conceptual diagram of an overall configuration of the radio communications system 100 serving as a textile machine operation support system.

The radio communications system 100 is configured according to a network standard such as LAN (Local Area Network). More specifically, the radio communications system 100 includes a wired LAN and a wireless LAN. The radio communications system 100 may include a CAN (Controller Area Network) for a factory, for example, in addition to the LAN

For example, the radio communications system 100 is used for collecting and managing information regarding a plurality of textile machines 11 (serving as industrial machines) in a textile factory 1. The information regarding each textile machine 11 means some pieces (or kinds) of information (referred to as "operation information") generated according to operation of the corresponding textile machine 11. More specifically, the pieces of information defined as the information regarding each textile machine 11 means pieces of information regarding respective statuses of some kinds of devices constituting the corresponding textile machine 11. To obtain the information regarding the corresponding textile machine 11, each textile machine 11 is provided with a sensor, for example. The radio communications system 100 is connected via the internet 2 to an external server 3, for example. Therefore, information regarding the textile factory 1 and other textile factories can be gathered and statistically processed in the external server 3. The radio communications system 100 may be a closed network that is not connected to WAN (Wide Area Network) such as the internet.

Devices constituting the radio communications system 100 will now be described briefly. The textile factory 1 is equipped with a plurality of relays (i.e., second radio communicators) 12, a plurality of portable terminals 13 and a plurality of access pointers (i.e., first radio communicators) 14, thereby configuring a wireless network. Each access pointer 14 functions as a master unit. Each relay 12 functions as a slave unit (or station). A part of the wireless network may be replaced with a wired network. For example, one or some of the relays 12 may be wired to the access pointer or pointers 14, a later-discussed first network hub 15 or so on. Incidentally, the "relay" may also be referred to as a "repeater".

The plurality of textile machines 11 are connected to the respective relays 12. Each textile machine 11 can be connected via a cable to the relay 12. Each relay 12 has a radio communication function so that the relay 12 can be wirelessly connected to a device within a communicable range surrounding the relay 12. Therefore, the relays 12 connect the textile machines 11 serving as industrial machines to a wireless network, so that the information regarding the textile machines 11 can be wirelessly transmitted to a device or devices other than the textile machines 11. Basically, the portable terminals 13 and the access pointers 14 are wirelessly connected to the relays 12. The present embodiment is based on an assumption that the relays 12 do not communicate with each other, although the relays 12 are communicable with each other. Each access pointer 14 has both a radio communication function and a cable communication function. Each access pointer 14 may be wirelessly connected directly to the portable terminal 13. Any adjoining relays 12 are arranged so that their communicable ranges overlap each other. Similarly, any adjoining access pointers 14 are arranged so that their communicable ranges overlap each other.

The textile factory 1 is equipped with the access pointer 14, the first network hub 15, an internal server 16, a second network hub 17 and a management device 18, thereby configuring a wired network. The number of access pointers 14 is plural. The number of other devices is basically single, however, may be pluralized, or may be omitted. A part of the wired network may be replaced with a wireless network.

The plurality of access pointers 14 are wired to the internal server 16 via the first network hub 15. The internal server 16 is wired to the management device 18 and the internet 2 via the second network hub 17. In the textile factory 1, only the management device 18 may be disposed in another room. In other word, the management device 18 may be disposed outside of the radio communicable range of the radio communications system 100.

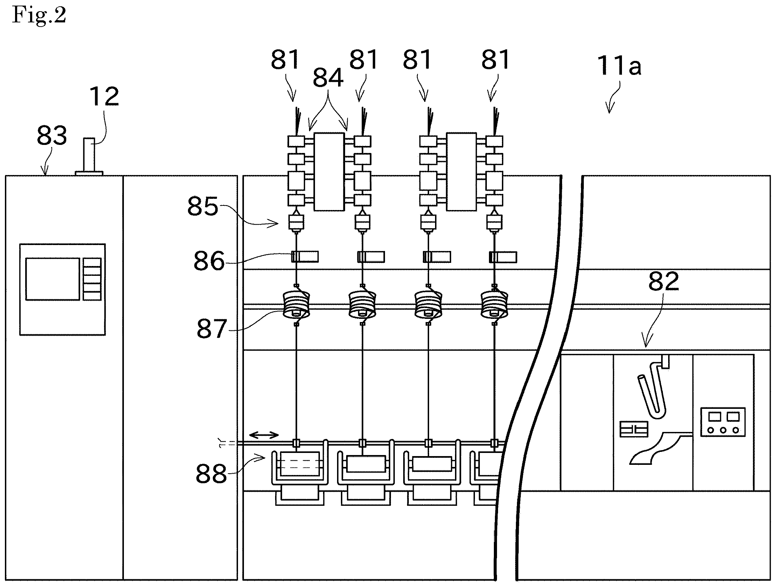

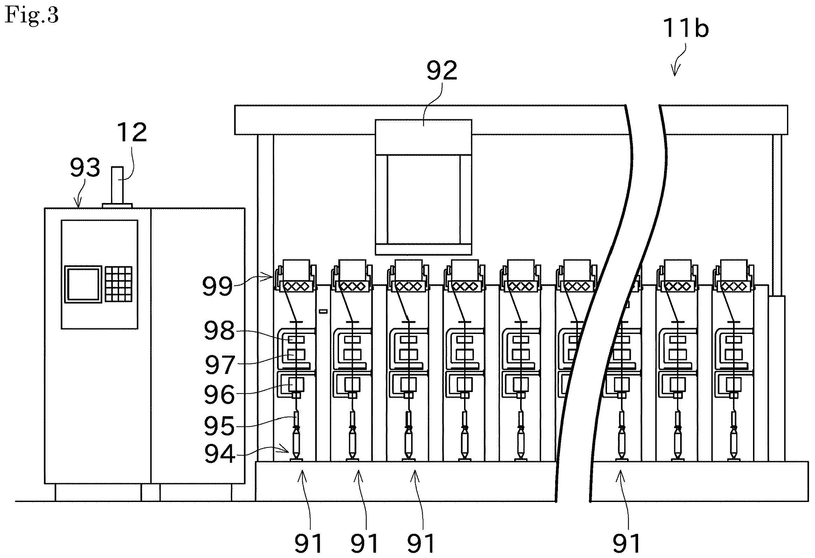

The devices serving as the components of the radio communications system 100 will now be described in detail. The textile machines 11 are immovably disposed at respective fixed positions. More specifically, the textile machines 11 may be made movable, however, the textile machines 11 are kept from moving while they are operated. Referring to FIGS. 2 and 3, description will now be given of a spinning machine 11a and an automatic winder 11b each of which serves as the textile machine 11. FIG. 2 is a front view of an overall configuration of the spinning machine 11a, and FIG. 3 is a front view of an overall configuration of the automatic winder 11b.

Referring to FIG. 2, the spinning machine 11a includes a plurality of spinning units (or spinning spindles) 81 which are aligned, a yarn joining cart 82, a machine base controller (control unit) 83, and an unillustrated doffer.

Each spinning unit 81 includes a drafting device 84, an air spinning device 85, a yarn quality measuring device 86, a yarn accumulator 87, and a winding device 88. The drafting device 84 includes multiple pairs of rollers through which a sliver is rolled out as a fiber bundle. The air spinning device 85 includes a nozzle mechanism for blowing a swirl airflow to the fiber bundle so as to form a yarn. The yarn quality measuring device 86 measures a quality of running yarn (e.g., a yarn thickness or its variation) by using an optical sensor or so on. The yarn accumulator 87 includes an outer peripheral surface on which yarn is wound to be temporarily accumulated. The temporal accumulation of yarn solves difference between a spinning speed of the air spinning device 85 and a winding speed of the winding device 88, while the difference occurs for any reason. The winding device 88 traverses a yarn while winding the yarn around a winding tube, thereby forming a package.

The yarn joining cart 82 can travel along the alignment direction of the spinning units 81. When one of the spinning units 81 has a disconnection of the yarn, the yarn joining cart 82 travels on unillustrated rails until it arrives and stops at the spinning unit 81 having the yarn divided. The yarn joining cart 82 includes a catching device and a yarn joining device. The catching device catches the yarn extended from the air spinning device 85 and the yarn extended from the package by suction airflow or so on, and guides the yarns to the yarn joining device. The yarn joining device joins the guided yarns to each other.

The machine base controller 83 is a controller for centrally managing the plurality of spinning units 81. The machine base controller 83 includes an arithmetic device such as CPU, a storage device such as a flash memory or a hard desk, and a communication device. The arithmetic device controls the plurality of spinning units 81, the yarn joining cart 82 and so on by executing a program stored in the storage device. The communication device communicates to each spinning unit 81, each relay 12 and so on. The machine base controller 83 also includes an operation device to be operated by an operator and a display device for displaying various pieces of information.

Referring to FIG. 3, the automatic winder 11b includes a plurality of winder units (or winder spindles) 91 which are aligned, a doffer 92, and a machine base controller (control unit) 93.

Each winder unit 91 includes a yarn feeding part 94, a yarn unwinding assisting device 95, a tensioning device 96, a yarn joining device 97, a yarn quality measuring device 98 and a winding part 99. The yarn feeding part 94 supports a yarn feeding bobbin. A yarn unwound from the yarn feeding bobbin has a portion (referred to as "balloon") that is swung by a centrifugal force to be centrifugally expanded. The yarn unwinding assisting device 95 contacts the balloon so as to hinder the yarn from being excessively swung so that the yarn can be unwound with a tension from the yarn feeding bobbin. The yarn joining device 97 guides the yarn unwound from the yarn feeding bobbin and a yarn from the package and joins the guided yarns to each other. The yarn quality measuring device 98 measures a quality of running yarn (e.g., a yarn thickness or its variation) by using an optical sensor or so on. The winding part 99 traverses a yarn while winding the yarn around a winding tube, thereby forming a package.

The doffer 92 can travel along the alignment direction of the winder units 91. When a package in one of the winder units 91 becomes full-winding, the doffer 92 travels until it arrives and stops at the winder unit 91 having the full-winding package. The doffer 92 removes the full-winding package from the winder unit 91 and supplies the winder unit 91 with a new winding tube having no yarn wound thereon.

The machine base controller 93 basically has the same configuration as the machine base controller 83 except that a controlled object is not the spinning unit 81 but the winder unit 91.

The above-mentioned machines 11a and 11b are mere embodiments of the textile machine 11. The radio communications system 100 is adaptable to any kind of textile machines 11 which may be different from the spinning machines 11a or the automatic winders 11b. For example, the radio communications system 100 is adaptable to ring spinning machines, open-end spinning machines, roving frames, drawing frames, carding machines, weaving machines, or knitting machines. Further, different kinds of textile machines 11 (for example, both the spinning device 11a and the automatic winder 11b) can be managed by the common radio communications system 100.

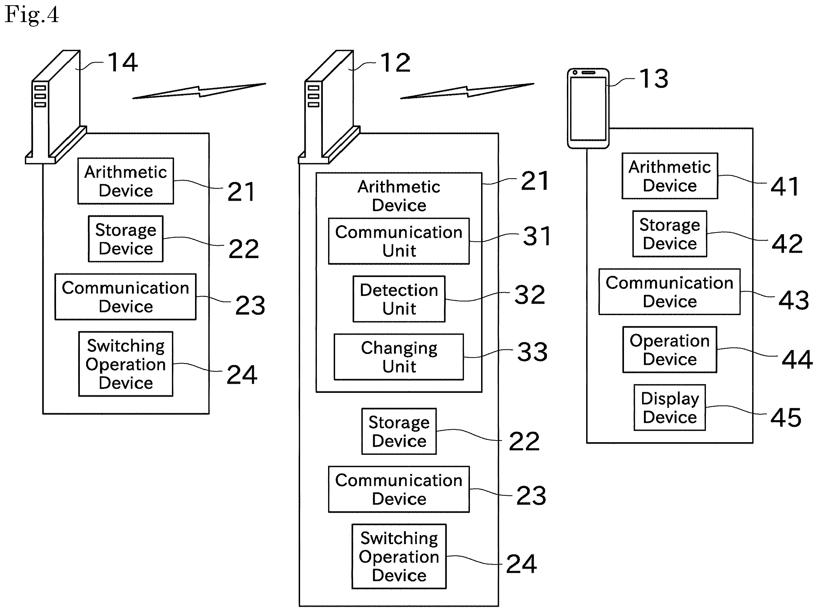

The relay 12 and the access pointer 14 will be described with reference to FIG. 4. FIG. 4 is a functional block diagram of the relay 12, the access pointer 14, and the portable terminal 13. In this embodiment, a common radio communicator selectively serves as either the relay 12 or the access pointer 14. In other words, the radio communicator is switchable between a relay mode for serving as the relay 12 and an access pointer mode for serving as the access pointer 14.

The radio communicator to serve as either the relay 12 or the access pointer 14 includes an arithmetic device 21, a storage device 22, a communication device 23, and a switching operation device 24. The arithmetic device 21, e.g., CPU, can perform various processes by executing corresponding programs. The storage device 22, e.g., a flash memory or a hard desk, stores programs to be executed by the arithmetic device 21 and set values inputted by an operator. The communication device 23 includes an antenna for radio communication and a connector to which a cable for wired communication is connected, for example. The switching operation device 24 is a hardware switch (e.g., DIP switch), which is operable for selectively setting the radio communicator in either the relay mode for serving as the relay 12 or the access pointer mode for serving as the access pointer 14.

Each relay 12, i.e., the radio communicator set in the relay mode by operating the switching operation device 24, is attached to any portion of the textile machine 11. In this embodiment, the relay 12 is mounted on an upper surface of the machine base controller 83 or 93. The textile machine 11 is immovably disposed at a fixed position, so that the relay 12 is also immovably disposed at its fixed position. On the other hand, each access pointer 14 is attached to a wall, a ceiling or so on of the textile factory 1, so that the access pointer 14 is also immovably disposed at its fixed position. Therefore, a positional relation among the textile machine 11, the relay 12 and the access pointer 14 is constant. Also, a distance between each relay 12 and each access pointer 14, a distance of each relay 12 from any other relay 12, and a distance of each access pointer 14 from any other access pointer 14 are constant. Each relay 12 receives the operation information from the corresponding textile machine 11 and transmits the operation information to the management device 18 via the access pointer 14, the internal server 16 and so on. The operation information transmitted from each relay 12 to the management device 18 is information regarding the amount of products produced by each unit (or each spindle, e.g., the spinning unit (spindle) 81 or the winder unit (spindle) 91), the number of alarms, positions of alarms, or measurement results of yarn quality, for example. Each of the relays 12 and the access pointers 14 may be removable from one position, e.g., the textile machine 11 or the wall, to be moved to another position.

When any radio communicator serves as the relay 12, its arithmetic device 21 functions as any of a communication unit 31, a detection unit 32 and a change unit 33 by executing a corresponding program. The communication unit 31 performs wired or radio communication by mainly controlling the communication device 23. The detection unit 32 detects a communication status regarding communication of the relay 12 to any access pointer 14 based on a radio filed intensity of radio wave received from the corresponding access pointer 14 or so on. The change unit 33 changes the access pointer 14 connected to the relay 12 to another access pointer 14 based on the communication status detected by the detection unit 32. The access point changing process performed by the change unit 33 will be detailed later.

The portable terminal 13 is a terminal handled and carried by an operator for operating the textile machine 11. For example, a smartphone, a tablet terminal, a laptop, or a wearable device, such as a smartwatch, can serve as the portable terminal 13. It means that a position of the portable terminal 13 is changed as the operator moves. The portable terminal 13 includes an arithmetic device 41, a storage device 42, a communication device 43, an operation device 44 and a display device 45. The arithmetic device 41, e.g., CPU, can perform various processes by executing corresponding programs. The storage device 42, e.g., a flash memory, stores programs to be executed by the arithmetic device 41 and so on. The communication device 43 is an antenna for radio communication, for example. The operation device 44 is a hardware key or a touch panel to be operated by an operator. The display device 45 displays information received from the internal server 16 or so on in response to operation by an operator.

The plurality of relays 12 and the plurality of access pointers 14 share common BSSID (Basic Service Set Identifier) and are set to have respective frequency channels which differ thereamong. Therefore, the access point for the portable terminal 13 can be changed from one relay 12 or access pointer 14 to another relay 12 or access pointer 14 by only operating the portable terminal 13 to change the frequency channel.

The internal server 16 gathers operation information regarding operation statuses of the textile machines 11 in the textile factory 1 and transmits information corresponding to command from the portable terminal 13 or management device 18 to the management device 18 or portable terminal 13. For example, the information transmitted from the internal server 16 to the portable terminal 13 includes information regarding which textile machine 11 and which unit (e.g., spinning unit 81 or winder unit 91) are operated, information for identifying which textile machine 11 and which unit (e.g., spinning unit 81 or winder unit 91) have alarm generated, matters and schedule of maintenance for each textile machine 11, an operation manual for operating each textile machine 11, and/or so on. For example, the information, i.e., operation information, transmitted from the internal server 16 to the management device 18 includes information regarding operation statuses, such as operation times or production amounts, of each textile machine 11 during a predetermined time and/or information regarding results of statistical processing in quality of yarn. By applying a predetermined operation to the management device 18, a supervisor can deliver a command to any textile machine 11 for local or collective change of settings of the textile machine 11, or a command to an operator in the textile factory 1, via the internal server 16, the access pointer 14 and so on. Also, by the supervisor's applying a predetermined operation to the management device 18, the management device 18 analyzes the operation information and transmits a result of the analysis to the portable terminal 13 or so on. If there are a plurality of textile factories 1, the external server 3 receives a command transmitted by a supervisor via the management device 18 and analyzes a result of analysis of operation information regarding the respective textile factories 1. The management device 18 displays the result of analysis regarding the textile factories 1 and transmits the analysis result to the portable terminal 13. Also, the management device 18 can display information regarding comparison of the results of analyses of the respective textile factories 1 with achievements of the textile factories 1, and can transmit the information regarding the comparison to the portable terminal 13.

A radio communication environment in the textile factory 1 will now be described. First, radio disturbances that may occur in the textile factory 1 and countermeasures will be described. A building as the textile factory 1 has a large area, and there is much powder dust such as cotton fly inside of the building. The textile factory 1 normally has few partitions among the textile machines 11. However, the textile machines 11 themselves can cause radio disturbance. Specifically each textile machine 11 includes a metal member, e.g., a metal frame or a metal casing, through which radio wave can hardly be transmitted. Moreover, the textile machine 11 includes the units (e.g., the spinning units 81 or the winder units 91) juxtaposed with no or slight gaps thereamong, so that the textile machine 11 can hardly refract radio wave, thereby being liable to cause radio disturbance. Furthermore, the textile factory 1 is provided therein with a movable body which moves in each textile machine 11 or another movable body which moves between different textile machines 11. The former movable body is e.g., the doffer 92, the yarn joining cart 82, or a blow cleaner. The blow cleaner is a device for blowing cotton fly generated from the drafting device 84, the yarn joining device 97 or so on. The blow cleaner is taller than the textile machine 11 and includes metal members, thereby being liable to cause radio disturbance. The latter movable body is e.g., a carrier of a can (a container for storing sliver) or the package. Also, an operator moves in the textile factory 1. The movement of the movable body in the textile machine 11 or between the different textile machines 11 and the movement of the operator are irregular. Therefore, a poor communication caused by radio disturbance because of the movable body or the operator occurs irregularly. When the poor communication occurs, necessary information may not be displayed on the portable terminal 13 held by the operator, or necessary information may not be transmitted from the corresponding textile machine 11 to the internal server 16 or so on. To reduce influence of the poor communication, it is desired to reduce the occurrence of radio disturbance or to configure a stable communication environment immediately after recovery from the poor communication caused by radio disturbance, for example.

To reduce the occurrence of radio disturbance, the access pointers 14 are mounted higher than the textile machines 11, for example. The relays 12 are mounted on the upper surfaces of the textile machines 11. By mounting the access pointers 14 and the relays 12 at high positions, radio wave is hardly shielded by the textile machines 11 or so on, thereby expanding a communicable range. Further, it is desired that the access pointers 14 and the relays 12 are arranged so as to have no obstacle (especially, metal obstacle) on a line between each access pointer 14 and each relay 12. Further, each relay 12 is disposed at an end of an alignment direction of the units (e.g., the spinning units 81 or the winder units 91) of the corresponding textile machine 11 (especially, on a side closer to the corresponding access pointer 14, as shown in FIG. 1). Due to the above-mentioned configuration, radio disturbance can hardly occur in the textile factory 1. However, the above-mentioned location of the access pointers 14 and the relays 12 is a mere example. The access pointers 14 and the relays 12 may be disposed at positions different from the above-mentioned positions. Also, development of communication environment between the access pointers 14 or relays 12 and the portable terminal 13 can reduce the occurrence of radio disturbance.

Radio interference that may occur in the textile factory 1 and countermeasures will now be described. The radio interference is liable to occur when an additional communicator is disposed in the textile factory 1. If an additional textile machine 11 having no relay 12 or so on is disposed in the textile factory 1, radio wave from the additional textile machine 11 (i.e., a radio circuit of the additional textile machine 11) may be set to have a frequency band, channel or so on causing radio interference of the access pointers 14 and relays 12 and so on. Further, component devices of the common radio communications system 100 may have radio interference therebetween because their available channels are limited.

To reduce the radio interference, it is desired that the access pointers 14 and the relays 12 transmit radio wave so that times when radio waves are simultaneously transmitted from at least two of the access pointers 14 and relays 12 become as few as possible. For example, different periods are allotted to the access pointers 14 and relays 12 respectively, and each of the access pointers 14 and relays 12 transmits radio wave only during its allotted period, thereby reducing radio interference. Each of the access pointers 14 and relays 12 may change a channel for its communication if its communication speed is low. The change of channel may be performed by either a device or an operator. If it is performed by the device, the channel is automatically changed when the communication speed becomes less than a certain value, for example. If it is performed by the operator, the operator logs in the access pointer 14 or relay 12 and changes its set channel when the operator decides to change a channel based on detection result of an application for measuring the communication speed, for example.

Communication break caused by power-off that may occur in the textile factory 1 will now be described. For example, if the relays 12 are supplied with power from the respective textile machines 11, the power supply from the corresponding textile machine 11 may be irregularly interrupted when the corresponding textile machine 11 is given maintenance, change of settings, change of devices, or so on. Also, blackout, including instantaneous power failure and instantaneous voltage drop, may occur depending on a local situation or an environmental situation. In case of such a power-off, communication break occurs. If the communication break occurs, information regarding energy (electric power and air) consumption of the textile machine 11 and information needed for predictive maintenance of the textile machine 11 are not transmitted to the internal server 16 and so on. As a result, productivity and product quality of the textile machine 11 may be affected. Especially, if there are many textile machines 11 (i.e., relays 12), much information is stored during the communication break. To reduce the influence of communication break, it is desired that a stable communication environment can be configured immediately after recovery from the communication break.

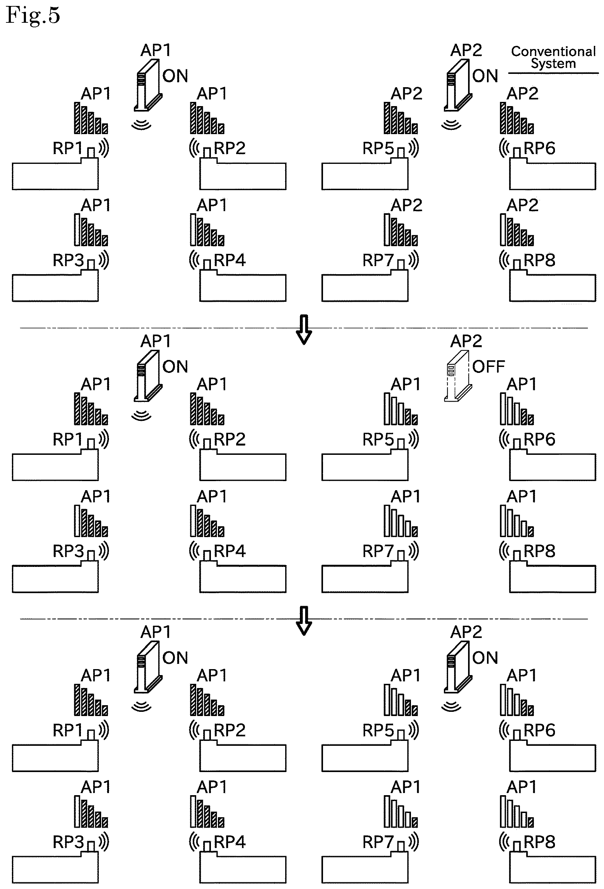

A processing of the relay 12 to change the access pointer 14 as its access point will now be described with reference to FIGS. 5 to 8. In some of FIGS. 5 to 12, the plurality of access pointers 14 are differentiated by designation of reference numerals "APn" (n=1, 2, 3,...), and the plurality of relays 12 are differentiated by designation of reference numerals "RPn" (n=1, 2, 3,...).

First, referring to FIG. 5, a situation where a conventional radio communications system has instantaneous power failure of one of its access pointers will be described. In FIG. 5, each relay is marked to indicate a name of an access pointer connected thereto and a radio field intensity of radio wave from the access pointer connected thereto. For example, a relay RP1 is connected to an access pointer AP1, and a radio filed intensity of radio wave from the access pointer AP1 detected by the relay RP1 is 5 on a scale of 1 to 5.

In a stage illustrated as an upper diagram of FIG. 5, relays RP1 to RP4 are connected to the access pointer AP1, and relays RP5 to RP8 are connected to an access pointer AP2. A radio field intensity of either the access pointer AP1 or AP2 serving as an access point for each of the relays RP1 to RP8 is 4 or 5 on a scale of 1 to 5.

Afterward, referring to a middle diagram of FIG. 5, if the access pointer AP2 is powered off, the relays RP5 to RP8 become impossible to be connected to the access pointer AP2. Therefore, the relays RP5 to RP8 are reconnected to the access pointer AP1 as another communicable access pointer. However, the relays RP5 to RP8 are distant from the access pointer AP1 so that the radio field intensity of the access pointer AP1 for each of the relays RP5 to RP8 becomes 1 or 2 on the scale of 1 to 5.

Afterward, referring to a lower diagram of FIG. 5, even if the power pointer AP2 is repowered to normally activate, the relays RP5 to RP8 do not act to change the access pointer AP1 serving as their access point, thereby keeping the access point AP1 connected to the relays RP5 to RP8. As a result, the communication speed and stability of the relays RP5 to RP8 are lowered and the access pointer AP1 is intensively stressed.

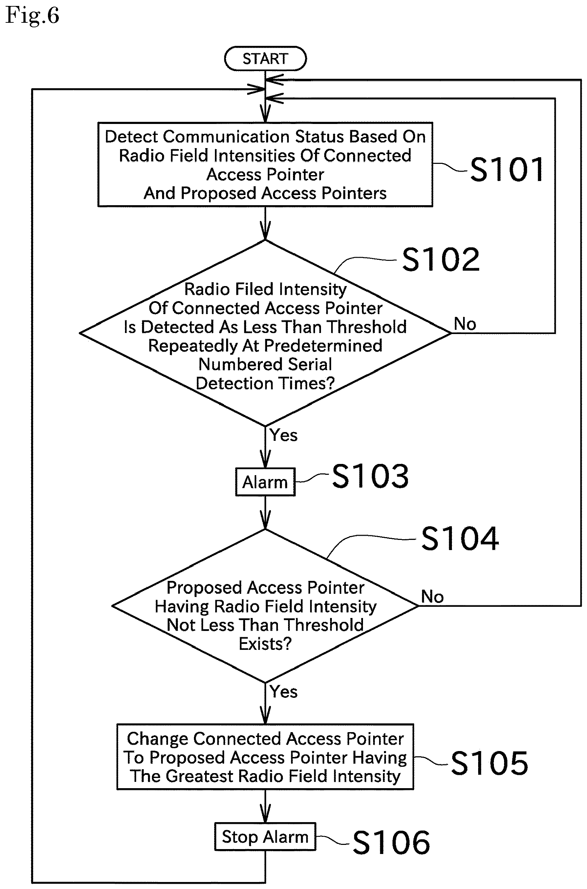

On the contrary, in the present embodiment, each relay 12 performs a processing as a flowchart of FIG. 6 to change the access pointer 14 connected thereto.

In this regard, first, the detection unit 32 of the relay 12 performs a detection step S101 of detecting a communication status based on a radio field intensity of an access pointer 14 connected to the relay 12 and a radio field intensity of another access pointer 14 proposed to become a new access point. Either a single access pointer 14 or a plurality of access pointers 14 may be proposed to become a new access point for the relay 12. The detection step S101 is repeatedly performed once predetermined seconds.

Subsequently, a first change requirement judging step S102 is performed to judge whether or not the radio field intensity of the connected access point device 14 is detected as less than a threshold repeatedly at predetermined numbered serial detection times. The threshold is set for deciding whether or not the connected access pointer 14 must be changed. In the present embodiment, the threshold of radio field intensity is 3. Therefore, at each detection time, it is judged whether or not the radio field intensity is less than 3 (i.e., whether the radio field intensity is either 1 or 2 or is any of 3, 4 and 5). In consideration that the radio field intensity varies for some reasons, e.g., measurement error and radio interference, the number of repeated detection of radio field intensity less than the threshold is set as the requirement for decision of changing the connected access pointer 14, so that the connected access pointer 14 can be changed only when the communication status is actually inappropriate.

Alternatively, in the step S101, the radio field intensity of the connected access pointer 14 or the radio field intensity of the proposed access pointer 14 may be continuously detected. In this case, in the step S102, the relay 12 confirms that its communication status meets the above-mentioned first change requirement for decision of changing the connected access pointer 14 when the radio field intensity is less than the threshold continuously during a predetermined period.

When the relay 12 confirms that its communication status meets the first change requirement, the relay 12 performs a step S103 of generating an alarm, and performs a second change requirement judging step S104 of judging whether or not the proposed access pointer 14 whose radio filed intensity is not less than the threshold exists. As mentioned above, in the present embodiment, the threshold of radio filed intensity is 3. Therefore, it is judged whether or not the radio field intensity of the proposed access pointer 14 is 3, 4 or 5. The alarm is blinking of a lamp of the relay 12 or an alarm sound, for example. According to the generation of alarm, occurrence of a fault status is logged.

When it is confirmed that the communication status meets both the first change requirement and the second change requirement, a change step S105 is performed so that the change unit 33 of the relay 12 selects one access pointer 14 with the greatest radio filed intensity from the proposed access pointers 14 with their radio filed intensities not less than the threshold, and changes the connected access pointer 14 to the selected access pointer 14 as the new access point for the relay 12. Therefore, the access point for the relay 12 can be changed to an access pointer having an appropriate communication status (great radio field intensity). Subsequently, the relay 12 is connected to the access pointer 14 having the radio field intensity not less than the threshold, and performs a step S106 of stopping the alarm generated by the step S103.

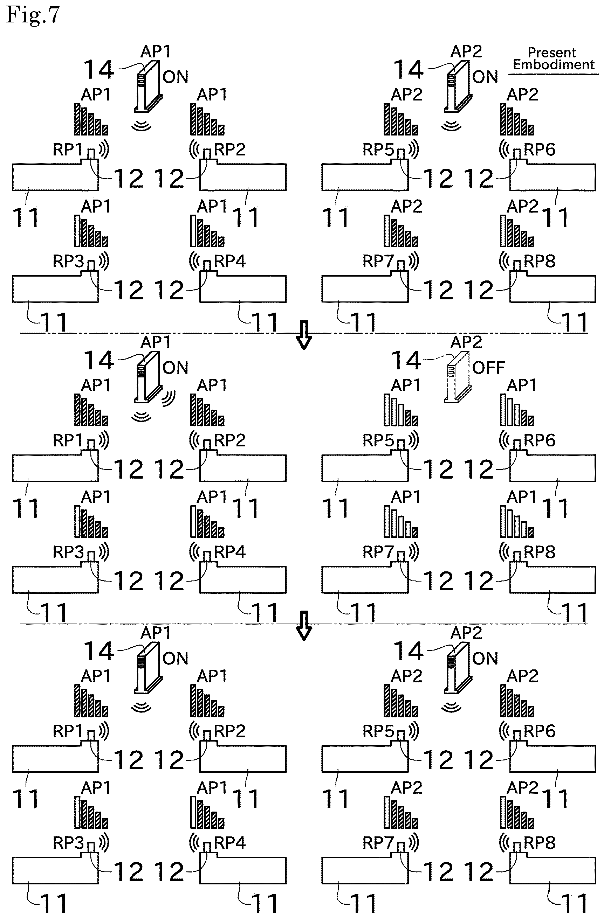

As understood from the above-mentioned description, in the present embodiment, the relay 12 spontaneously changes its access point to the access pointer 14 having an appropriate communication status (great radio field intensity), thereby automatically maintaining its appropriate radio connection status. This is the effect that cannot be obtained by the conventional system. Hereinafter, a processing performed by the relay 12 according to the present embodiment when the same situation as that of FIG. 5 occurs will be described with reference to FIG. 7.

An upper diagram of FIG. 7 is identical to that of FIG. 5. Afterward, referring to a middle diagram of FIG. 7, if the access point AP2 is powered off, the relays RP5 to RP8 are reconnected to the access pointer AP1. Accordingly, the radio field intensity of the access pointer AP1 for each of the relays RP5 to RP8 becomes 1 or 2 on a scale of 1 to 5, thereby meeting the first change requirement. However, in the stage illustrated as the middle diagram in FIG. 7, there is no existing access pointer having the radio field intensity not less than the threshold. This communication status does not meet the second change requirement.

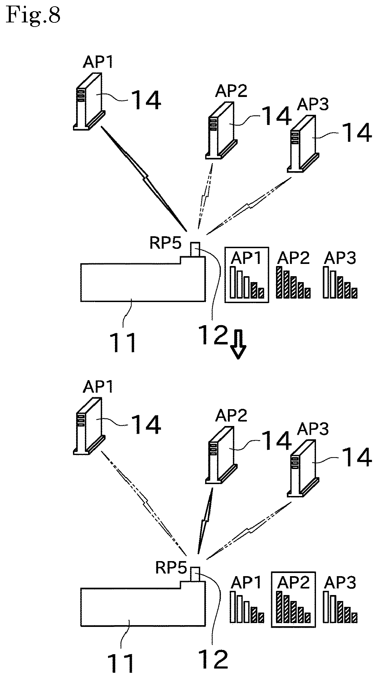

Afterward, if the access pointer AP2 is repowered, the radio field intensity of the access pointer AP2 for each of the relays R5 to R8 becomes 4 or 5 on the scale of 1 to 5, i.e., not less than the threshold, thereby meeting the second change requirement. In this stage, referring to FIG. 8, if another access pointer AP3 is powered simultaneously with the repowering of the access pointer AP2, a radio field intensity of the access pointer AP3 becomes 3 that is not less than the threshold. However, the change unit 33 of the relay 12 selects an access pointer having the greatest radio field intensity, so that the change unit 33 does not select the access pointer AP3 but selects the access pointer AP2 as its access point.

As a result, as illustrated in a lower diagram of FIG. 7, the relays RP5 to RP8 are connected to the access pointer AP2. Therefore, the relays 12 and the access pointers 14 can have an optimal connection relation thereamong configured automatically. This effect is the point different from that of the conventional system.

An alternative embodiment as modification of the above-mentioned embodiment will be described. In the following description of the alternative embodiment and in drawings of the alternative embodiment, the same members as (or members similar to) those in the foregoing embodiment may be designated by the same reference numerals as those in the foregoing embodiment, and description of such the same or similar members may be omitted.

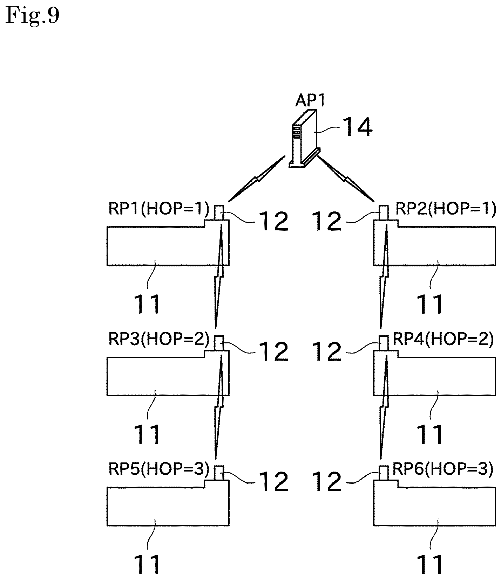

In the foregoing embodiment, all the relays 12 are each connected directly to the corresponding access pointer 14. On the contrary, in the present alternative embodiment, at least one of the relays 12 is wirelessly connected via another relay 12 to the corresponding access pointer 14. The number of relays 12 serially relaying a radio communication to the access pointer 14 is referred to as a hopping number (HOP). Referring to FIG. 9, each of the relays RP1 and RP2 is wirelessly connected directly to the access pointer 14 (meaning "HOP=1"). Each of the relays RP3 and RP4 is wirelessly connected to the access pointer 14 via the relay RP1 or RP2 (meaning "HOP=2"). Each of the relays RP5 and RP6 is wirelessly connected to the access pointers 14 via both the relay RP1 or RP2 and the relay RP3 or RP4 (meaning "HOP=3"). Due to this alternative embodiment, the relays 12 can wirelessly communicate with the access pointers 14 even if one or some relays 12 are distant from the access pointers 14. However, the use of at least one relay 12 for relaying radio communication between another relay 12 and the access pointer 14 may deteriorate a communication quality.

Therefore, in the present alternative embodiment, the first change requirement includes another status in addition to or instead of the radio field intensity of the access pointer AP1. For example, the first change requirement may be set based on the hopping number because the communication quality may be deteriorated according to increase of the hopping number. Moreover, even if the hopping number is constant, the communication quality varies according to a radio field intensity for radio communication between an access pointer 14 and a relay 12 and a radio field intensity for radio communication between one relay 12 and another relay 12. Therefore, it is desired that the first change requirement is set based on integration of these statuses.

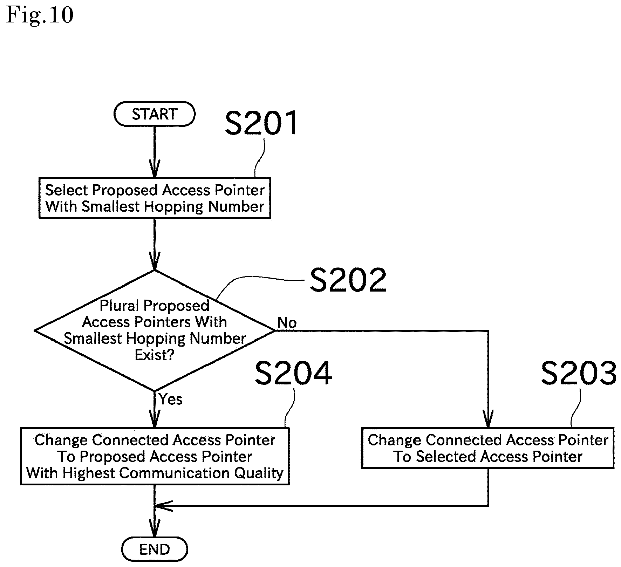

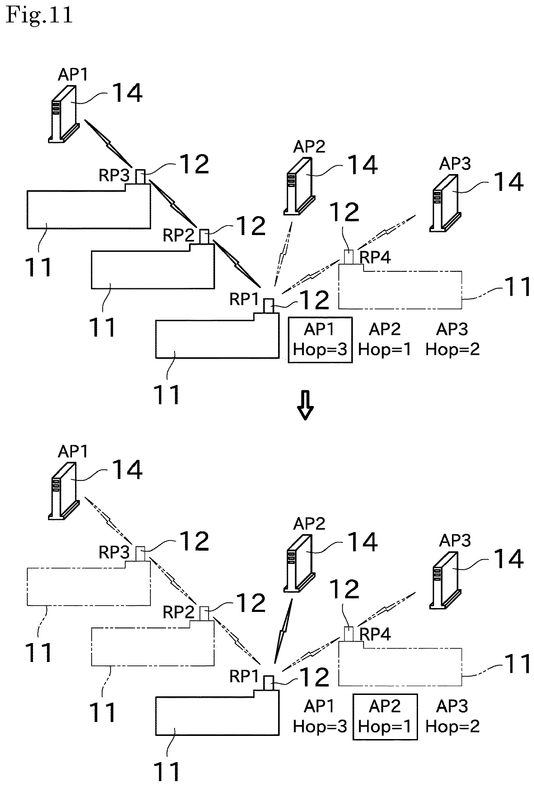

In the present alternative embodiment, each relay 12 performs a processing illustrated as a flowchart of FIG. 10 to select one access pointer 14 to serve as an access point for the relay 12 from proposed access pointers 14. First, the relay 12 performs a step S201 of selecting a proposed access pointer having the smallest hopping number. For example, referring to FIG. 11, the hopping number is 3 when the relay RP1 connects to the connected access pointer AP1, the hopping number is 2 when the relay RP1 connects to the proposed access pointer AP2, and the hopping number is 1 when the relay RP1 connects to the proposed access pointer AP3. In this state, the relay 12 (RP1) selects the access pointer AP2 having the smallest hopping number.

Subsequently, the relay 12 performs a step S202 of judging whether or not there are a plurality of proposed access pointers 14 having the smallest hopping number. If only one proposed access pointer 14 has the smallest hopping number, the relay 12 performs a step S203 of changing its access point to the access pointer 14 selected by the step S201.

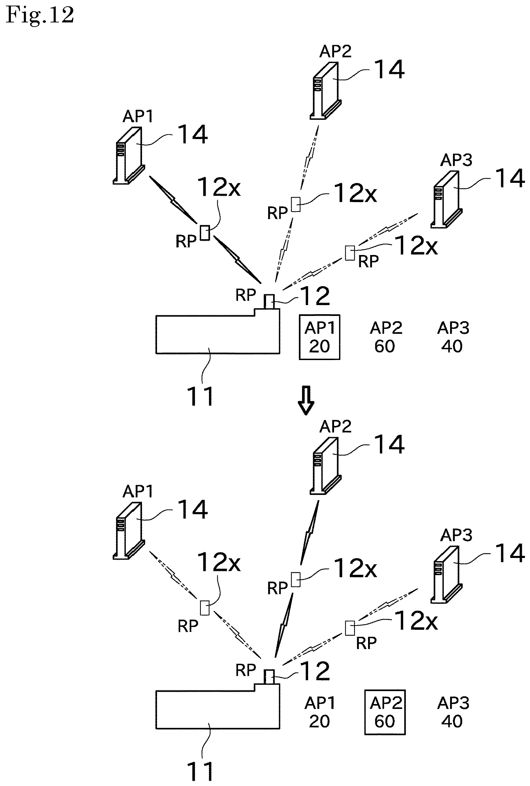

On the contrary, if a plurality of proposed access pointer 14 have the smallest hopping number, the relay 12 performs a step S204 of changing its access point to the proposed access pointer 14 having the highest communication quality level. In this regard, a high communication quality level means a great radio field intensity, a high communication speed, or so on. For example, referring to FIG. 8, if the hopping number of any access pointer 14 is 1, the communication quality level of the access pointer 14 can be measured based on the radio field intensity of the access pointer 14 similarly to the foregoing embodiment. Referring to FIG. 12, if the hopping number of each of the plurality of access pointers 14 for a concerned relay 12 is not less than 2, the communication quality level of a whole route from the concerned relay 12 to each access pointer 14 via another intermediate relay (designated by a reference numeral 12x in FIG. 12 and description thereof) is adopted for judgement. In FIG. 12, the communication quality level is indicated by a corresponding numeral. The communication quantity level can be calculated by adopting a total value of a radio field intensity of radio wave from the concerned relay 12 to the intermediate relay 12x and a radio field intensity of radio wave from the intermediate relay 12x to the access pointer 14, for example.

In this way, one access pointer 14 is selected as an optimal access point for the relay 12 so that a rational route from the relay 12 to the access pointer 14 can be selected even in the condition that a plurality of relays 12 relay a radio connection on the route to the access pointer 14.

As mentioned above, the radio communications system 100 comprises the plurality of textile machines 11 and the management device 18 for analyzing operation information regarding operation of the plurality of textile machines 11. The radio communications system 100 is configured so as to transmit the operation information from the textile machines 11 to the management device 18. The radio communications system 100 comprises the plurality of access pointers 14 and the plurality of relays 12. The plurality of access pointers 14 are connected to the management device 18, and are immovably disposed at respective fixed positions. The plurality of relays 12 are connected to the plurality of textile machines 11 respectively so that each of the relays 12 relays connection between the corresponding textile machine 11 and the corresponding access pointer 14, and are immovably disposed at respective fixed positions. Each of the relays 12 includes the communication unit 31, the detection unit 32 and the change unit 33. The communication unit 31 performs wireless relay connection to any one of the plurality of access pointers 14, including the first access pointer AP1 and the second access pointer AP2. In the detection step, the detection unit 32 detects the communication status of the first access pointer AP1 connected to the relay 12, and the communication status of the second access pointer AP2 unconnected to the relay 12. In the change step, the change unit 32 changes the access point from the first access pointer AP1 to the second access pointer AP2 whose communication status is better than that of the first access pointer Ap1 when the communication statuses detected by the detection unit 32 are judged to meet a requirement for changing the access point. In this way, the radio communications system 100 performs the textile machine operation support method according to the present embodiment.

Therefore, each relay 12 can spontaneously change its access point to the second access pointer AP2 having the appropriate communication status so that it does not have to wait for disconnection of the first access pointer AP1. Especially, in a case where the relay 12 is immovably disposed at a fixed position, its communication status can hardly be changed so that if it is connected to an access pointer 14 having an inappropriate communication status, the connection to the access pointer 14 having the inappropriate communication status is liable to continue. However, the present processing as mentioned above can develop the communication status. Therefore, the communication status between the access pointer 14 and each of the relays 12 can be kept appropriate so that the appropriate communication status can be always made between the plurality of textile machines 11 and the management device 18. The management device 18 can promptly obtain and analyze a huge amount of information generated in the plurality of textile machines 11. As a result, operation of the textile machines 11 can be optimized and the textile machines 11 can be surely given of maintenance at problematic points.

In the foregoing preferred embodiment, the radio communications system 100 is configured so that each of the communication statuses of the first access pointer AP1 and the second access pointer AP2 detected by the detection unit 32 is the radio field intensity.

Therefore, the communication statuses can be judged exactly.

In the foregoing preferred embodiment, the radio communications system 100 is configured so that the requirement includes a condition that the radio field intensity of the first access pointer AP1 is less than the threshold, and the radio field intensity of the second access pointer AP2 is the greatest of those of the plurality of access pointers.

Therefore, due to adoption of the radio field intensity for the judgement, the communication statuses can be easily and exactly judged in appropriateness thereof so that each relay 12 can be surely connected to an appropriate access pointer 14.

In the foregoing preferred embodiment, the radio communications system 100 is configured so that the requirement includes a condition that the radio field intensity of the first access pointer AP1 is less than the threshold repeatedly at predetermined numbered serial detection times or continuously for a predetermined detection period, and the radio field intensity of the second access pointer AP2 is the greatest of those of the plurality of access pointers 14.

Therefore, in a case where the radio filed intensity is temporarily lowered and is quickly recovered to an appropriate level, the access pointer 14 serving as the access point can be kept from being changed, thereby inhibiting waste change of the access point.

In the radio communications system 100 according to the foregoing preferred embodiment, each of the relays 12 is wirelessly connected to the portable terminal 13. In the radio communications system 100 according to the alternative embodiment, each of the relays 12 is wirelessly connected to another of the relays 12. The communication unit 31 of the corresponding relay 12 relays connection between the portable terminal 13 or the other of the relays 12 and the access pointer 14.

Therefore, in addition to the corresponding relay 12, the portable terminal 13 or the other relay 12 connected to the corresponding relay 12 can come to have an appropriate communication status.

In the foregoing preferred embodiment, the radio communications system 100 is configured so that the result of analysis by the management device 18 is transmitted to the portable terminal 13.

Therefore, based on the analysis result displayed on the portable terminal 13, an operator handling the portable terminal 13 can optimize operation of the textile machines 11, perform maintenance for a problematic point in any textile machine 11, or so on.

The above description is given of a preferred embodiment and an alternative embodiment of the invention. The above-mentioned configuration can be modified as follows:

The above-mentioned change requirements are mere examples. The requirement may include another additional condition. For example, a communication speed may be adopted instead of the radio field intensity. The selection of the access pointer 14 to serve as the access point may be based on the communication speed or the number of relays 12 connected to the access pointer 14.

The change requirement for changing the connected access pointer to another access pointer can be set variably depending on the type of textile machines or the amount of operation information (i.e., communication traffic volume). For example, thresholds of radio field intensity as the change requirement may be set variably so that a threshold for an air spinner is 4, a threshold for another kind of textile machine (e.g., a ring frame) is 3, and a threshold for another kind of textile machine (e.g., a drawing frame) is 2. Further, the threshold of radio field intensity as the change requirement for the air spinner may be set variably so that the threshold is 2 during a lot changing process, the threshold is 3 during a yarn joining process or a doffing process, and the threshold is 4 during a spinning process. For example, the air jet type air spinner such as shown in FIG. 2 is tall so as to spoil the communication environment. The communication environment becomes worse as an interior height of the building of the textile factory 1 is reduced. Also, the communication environment becomes worse if the blow cleaner is disposed in the textile factory 1. In such an inappropriate communication environment, the radio field intensity is liable to be low. Therefore, it may be desired that the threshold of radio field intensity as the change requirement is rather low.

In the foregoing embodiments, a timing for performing the process of changing the access pointer 14 is not specified. For example, a communication traffic volume per unit time between any relay 12 and any access pointer 14 may be measured, and the process of changing the access pointer 14 may be performed at a timing when the communication traffic volume becomes small. The access pointer 14 may be changed after a certain kind of information is completely transmitted between the relay 12 and the access pointer 14. The certain kind of information is information with high urgency, or information based on operation of the portable terminal 13 or the management device 18, for example. Therefore, the information with high urgency can be promptly transmitted and a waiting time of an operator or a supervisor can be shortened.

The foregoing description is adaptation of the radio communications system 100 to the textile factory 1. The radio communications system 100 may be also adaptable to any other kind of factory. In this alternative case, instead of the textile machine 11, industrial machines used in the other kind of factory are connected to the network by respective relays 12. The radio communications system 100 may be also adaptable to an office or a commercial facility, instead of a factory.

## Claims

1. A textile machine operation support system comprising:
a plurality of textile machines;
a management device for analyzing operation information regarding operation of the plurality of textile machines, the operation information being transmitted from the textile machines to the management device;
a plurality of first radio communicators connected to the management device so as to serve as access pointers, and immovably disposed at respective fixed positions; and
a plurality of second radio communicators connected to the plurality of textile machines respectively so as to serve as relays each of which relays connection between the corresponding textile machine and the corresponding first radio communicator, and immovably disposed at respective fixed positions;
each of the second radio communicators including:
a communication unit for performing wireless relay connection to any one of the plurality of first radio communicators, including a first access pointer and a second access pointer;
a detection unit for detecting a communication status of the first access pointer connected to the second radio communicators, and a communication status of the second access pointer unconnected to the second radio communicators; and
a change unit for changing an access point from the first access pointer to the second access pointer whose communication status is better than that of the first access pointer when the communication statuses detected by the detection unit are judged to meet a requirement for changing the access point.

2. The textile machine operation support system according to claim 1, wherein each of the communication statuses of the first access pointer and the second access pointer detected by the detection unit is a radio field intensity.

3. The textile machine operation support system according to claim 2, wherein the requirement includes a condition that the radio field intensity of the first access pointer is less than the threshold, and the radio field intensity of the second access pointer is the greatest of those of the plurality of first radio communicators.

4. The textile machine operation support system according to claim 2, wherein the requirement includes a condition that the radio field intensity of the first access pointer is less than the threshold repeatedly at predetermined numbered serial detection times or continuously for a predetermined detection period, and the radio field intensity of the second access pointer is the greatest of those of the plurality of first radio communicators.

5. The textile machine operation support system according to any one of claims 1 to 4, wherein each of the second radio communicators is wirelessly connected to another of the second radio communicators or a portable terminal, and
wherein the communication unit of the corresponding second radio communicator relays connection between the other of the second radio communicators or the portable terminal and the first radio communicator.

6. The textile machine operation support system according to any one of claims 1 to 5, wherein a result of analysis by the management device is transmitted to a/the portable terminal.

7. A textile machine operation support method,
wherein operation information regarding operation of a plurality of textile machines is transmitted from the textile machines to a management device and is analyzed by the management device, and
wherein a plurality of first radio communicators are connected to the management device so as to serve as access pointers and are immovably disposed at respective fixed positions, and a plurality of second radio communicators are connected to the plurality of textile machines respectively so as to serve as relays each of which relays connection between the corresponding textile machine and the corresponding first radio communicator and are immovably disposed at respective fixed positions,
the textile machine operation support method comprising the following steps performed by each of the second radio communicators:
a detection step of detecting a communication status between the corresponding second radio communicator and a first access pointer connected to the corresponding second radio communicator and a communication status between the corresponding second radio communicator and a second access pointer unconnected to the corresponding second radio communicator; and
a change step of changing an access point for the corresponding second radio communicator from the first access pointer to the second access pointer whose communication status is better than that of the first access pointer when the communication statuses detected by performing the detection step are judged to meet a requirement for changing the access point.
